# EUROPÄISCHE PATENTANMELDUNG

(11) **EP 2 604 582 A1**
(43) Veröffentlichungstag der Anmeldung: **19.06.2013**
(21) Anmeldenummer: 11009935.5
(22) Anmeldetag: 17.12.2011
(51) Int. Cl.: C03B 23/025, C03B 23/033, C03B 27/044, C03B 23/035

(54) **Verfahren und Vorrichtung zum dreidimensionalen Verformen von Platten, insbesondere Glasplatten**

(71) Anmelder: Cristales Automotrices de Jalisco, S.A., MX - C.P. 44940 Guadalajara (MX)
(72) Erfinder: Tovar, Miguel, CP 45120 Guadalajara, Jal. (MX)
(74) Vertreter: Stenger, Watzke & Ring

(57) **Zusammenfassung**

Um ein gattungsgemäßes Verfahren zum dreidimensionalen Verformen von Glasscheiben, welche
a) im ersten Schritt auf die Erweichungstemperatur erwärmt,
b) im zweiten Schritt verformt, und
c) im dritten Schritt durch gezielte Kühlung vorgespannt werden,
wobei die Verfahrensschritte hintereinander auf einzelne aufeinanderfolgende Bearbeitungssegmente der zu verformenden Platte derart angewandt werden, dass unterschiedliche nachfolgende Bearbeitungssegmente der Platte zur gleichen Zeit in einem anderen Verfahrensschritt wirksam bearbeitet werden, wobei nachfolgende Bearbeitungssegmente beispielsweise noch auf Verarbeitungstemperatur erwärmt werden, während vorlaufende Bearbeitungssegmente beispielsweise schon verformt werden, wobei die Glasscheiben in wenigstens einem Verfahrensschritt mit Luftströmungen beaufschlagt werden, zu verbessern, wird mit der Erfindung vorgeschlagen, dass die Luftströmungen, gesteuert aus Gebläseluft und Kompressorluft, kombiniert werden.

## Beschreibung

Die Erfindung betrifft ein Verfahren zum dreidimensionalen Verformen von Glasscheiben, welche im ersten Schritt auf die Erwärmungstemperatur erwärmt, im zweiten Schritt verformt und im dritten Schritt durch gezielte Kühlung vorgespannt werden. Darüber hinaus betrifft die Erfindung eine Vorrichtung zum dreidimensionalen Verformen von Platten nach dem erfindungsgemäßen Verfahren.

An dreidimensional verformten Platten besteht allgemein ein sehr großer Bedarf. So werden dreidimensional verformte Glasscheiben beispielsweise in der Automobilindustrie oder auch in der Architektur als Bauglas in großem Umfange benötigt. Heute dehnt sich dieser Bedarf auch auf dreidimensional verformte Platten aus anderen Materialien aus.

Die Technologie zur Verformung von Glasscheiben hat sich chronologisch entwickelt. Ursprünglich wurden Glasscheiben in sogenannten Vertikalverfahren verformt, wozu die zu verformenden Glasscheiben vertikal in Öfen erwärmt und dann in vertikaler Position mittels Klammern gehalten in eine Vertikalform gebracht wurden. Um Sicherheitsglas zu erhalten, wurden die Oberflächen abgekühlt.

Im Laufe der Zeit ist man dazu übergegangen, Glasscheiben in sogenannten Horizontalverfahren zu verformen, wozu zu verformende Platten aus Glas horizontal in einem Ofen liegend auf ihre Erweichungstemperatur gebracht werden. Die Erweichungstemperatur ist die Temperatur, bei welcher das Material, aus dem die zu verformende Platte gefertigt ist, plastisch verformbar ist. In den Anfängen des Horizontalverfahrens wurden die horizontal erwärmten Platten z. B. mittels vakuumevakuierten Halteglocken hochgehoben und einer Form zugeführt, indem die Platte auf die Form mehr oder weniger fallengelassen wurde. Durch die Schwerkraft hat die Platte dann die gewünschte Verformung eingenommen. Um jedoch die Platte anschließend abkühlen zu können, wird als Form im Wesentlichen ein Rahmen verwendet, so dass sich in der Rahmenmitte unerwünschte Deformationen der Platten ergeben haben.

Auch führt man die horizontal erwärmten Platten über Rollen einer Biegestation zu. Als Öfen werden bevorzugt sogenannte Rollenherdöfen eingesetzt, und die auf die Erweichungstemperatur erwärmten Platten werden dann über Rollen, insbesondere keramische Rollen, der Biegestation zugeführt, beispielsweise gemäß US-A-4 139 359. Nach dem Verformen wird die Platte entweder direkt auf der Biegestation gekühlt oder einer Kühlstation zugeführt. In neueren Bauformen besteht die Biegestation im Wesentlichen aus Formstäben, welche nebeneinander angeordnet rostartig eine Oberfläche bilden, die der gewünschten, durch die Verformung zu erhaltenden Form entspricht. Nach einem bekannten Verfahren werden die horizontal erwärmten Glasplatten auf horizontalen Rollen aus dem Ofen heraustranportiert. Dann werden die horizontal angeordneten, waagerechten Rollen abgesenkt, und die Platte kommt auf den die Form bildenden Formstäben zu liegen. Durch Andruckrollen wird die Scheibe auf die Formstäbe gepresst und erhält ihre gewünschte Form. Anschließend wird die geformte Scheibe einer Kühlstation zugeführt, welche im Wesentlichen aus Luftdüsen besteht, durch die Kühlluft auf die Scheibenoberflächen geblasen wird.

Zur Durchführung dieser beschriebenen Verfahren ist es durchaus bekannt, die Stationen aneinander anzuschließen oder beispielsweise auch die Biege- und die Kühlstation in einer Vorrichtung zu integrieren, beispielsweise aus EP-A1-0 263 030.

Sämtliche vorbekannten Verfahren und Vorrichtungen arbeiten jedoch nach ein und demselben Grundsatz. Dieser Grundsatz besagt, dass zunächst die gesamte zu verformende Platte auf ihre Erwärmungstemperatur erwärmt wird, anschließend die gesamte Platte auf der Verformungsstation verformt und schließlich die gesamte Platte durch Kühlen vorgespannt wird. Es ist jedoch offensichtlich, dass sich bereits in der Zeit, in welcher die gesamte Platte aus dem Ofen auf die Biegestation verbracht wurde, Wärmeverluste ergeben. Da insbesondere bei Glasscheiben sowohl zum Verformen als auch zum Vorspannen in etwa die gleiche Plattentemperatur benötigt wird, wirken sich diese Wärmeverluste auf die Qualität der erhaltenen Platten erheblich aus. Weiterhin wirkt sich auf die Qualität der Platten nachteilig aus, dass beim Horizontalverfahren die Platten horizontal liegend über die genannten Keramikrollen aus dem Ofen heraus zur Biegestation verfahren werden. Somit verbleiben die in Vorschubrichtung hinteren Teile der Platte länger im Ofen als die vorderen, an denen sich wiederum schneller die Wärmeverluste auswirken. Dadurch hat die auf der Biegestation ankommende Platte bereits an verschiedenen Stellen unterschiedliche Temperaturen.

Es wurden bereits viele Maßnahmen versucht, um den sich durch die Wärmeverluste ergebenden Nachteilen entgegenzuwirken. Zum einen wurde die Platte auf eine Übertemperatur erhitzt. Da jedoch der Übertritt in den Bereich der plastischen Verformbarkeit sehr schnell stattfindet, ergibt sich bei einer zu großen Übertemperatur eine grundsätzliche Welligkeit der erhaltenen Platte, wenn sie aus dem Ofen heraus auf die im Wesentlichen aus Rollen oder Formstäben bestehende Biegestation verbracht wird. Es genügen bereits geringe Temperaturunterschiede in der Größenordnung von 2°C bis 3°C, um diese Welligkeit zu bewirken. Das Ergebnis ist jedoch nicht befriedigend, wenn enge Toleranzen, beispielsweise im Bereich des Bauglases, gefordert sind. Auch andere Versuche, die Platten warm zu halten, nachzuwärmen oder dergleichen haben sich als wirtschaftlich zu aufwendig und im Ergebnis äußerst unbefriedigend erwiesen.

Ein weiteres Problem mit den herkömmlichen Verfahren und Vorrichtungen ergibt sich in der Beschränkung hinsichtlich der formbaren Radien. Aufgrund der unterschiedlichen Temperatur einer Glasplatte an ihrer Vorder- und Hinterkante nach dem Verfahren aus dem Wärmeofen zur Biegestation lassen sich mit vernünftigem wirtschaftlichem Aufwand keine gleichmäßigen Zylinder formen. Sollen sehr enge Radien geformt werden, so geht dies nur durch aufeinanderfolgende Verformung mit immer enger werdendem Radius. Aufgrund der beschriebenen Wärmeverluste ist dies nicht mit vertretbarem wirtschaftlichem Aufwand möglich. Nahezu unmöglich ist es, Kegelsegmente herzustellen, was zum einen an den unterschiedlichen Temperaturen an der gleichen Platte, zum anderen an den Wärmeverlusten liegt. Wenn insbesondere in der Architektur sehr enge Radien, sehr gleichförmige Zylinder oder Kegelsegmente, beispielsweise für die Dachgestaltung, gefordert sind, so werden die gewünschten Glasformen in aller Regel mit sehr großem wirtschaftlichem Aufwand in Einzelfertigung hergestellt.

Aus der EP 0 634 371 A1 ist ein Verfahren zum dreidimensionalen Verformen von Glasscheiben bekannt, welches die beschriebenen Nachteile vermeidet. Insbesondere soll der erforderliche wirtschaftliche Aufwand zum Verformen erheblich verringert werden. Es sollen auch ohne großen Formenaufwand möglichst gleichförmige Zylinder und enge Radien bis hin zu Kegelsegmenten formbar sein.

Es wird vorgeschlagen, dass die Verfahrensschritte des Erwärmens, des Verformens und des Vorspannens hintereinander auf einzelne aufeinanderfolgende Bearbeitungssegmente der zu verformenden Platte angewandt werden, so dass unterschiedliche Bearbeitungssegmente der Platte zu gleichen Zeit in einem anderen Verfahrensschritt bearbeitet werden.

Dieses Verfahren bietet den Vorteil, dass die Verformung der Platten, insbesondere von Glasscheiben, in einem kontinuierlichen Ablauf durchgeführt werden kann. Die Platte wird nicht mehr insgesamt erwärmt, insgesamt verformt und in ihrer Gesamtheit vorgespannt, sondern nach Erreichen der gewünschten Erweichungstemperatur an ihrer in Transportrichtung vorne liegenden Kante zum Verformen aus dem Ofen verfahren, so dass die Vorderkante bereits verformt wird, während die dahinterliegenden Segmente der Platte noch in dem Ofen erwärmt werden. Wird die Platte weiter vorgefahren, werden die folgenden Bearbeitungssegmente verformt, während das vorderste Bearbeitungssegment bereits durch gezielte Kühlung vorgespannt wird. Dieses Verfahren wird kontinuierlich weitergeführt, bis die Hinterkante der zu verformenden Platte den Ofen mit Erweichungstemperatur verlassen hat, verformt und anschließend durch gezielte Kühlung vorgespannt wurde, während der vorderste Plattenbereich bereits fertig verformt ist.

Der besondere Vorteil dieses Verfahrens besteht darin, dass die zu verformende Platte an allen Stellen, an welchen sie verformt wird, jeweils die gleiche Temperatur aufweist. Somit ist es ohne weiteres möglich, völlig gleichförmige Zylinder zu formen. Darüber hinaus gibt es keine Verformungsunterschiede zwischen Plattenvorder- und Plattenhinterkante. Das Verfahren wird dadurch auch erheblich wirtschaftlicher, dass nurmehr sehr kurze Verformstrecken erforderlich sind, da immer nur ein kurzes Plattensegment direkt nach Verlassen des Ofens verformt werden muss.

Wenngleich das genannte Verfahren grundsätzlich gute Ergebnisse hervorbringt, haben sich eine Reihe von Nachteilen herausgestellt. Zum einen wird in herkömmlicher Weise in der Kühlstation mit Gebläseluft gearbeitet. Abgesehen davon, dass dies energieaufwändig ist, lässt sich keine optimale Steuerung des entsprechenden Abkühlprozesses bewirken.

An- und Abschalten verbraucht regelmäßig zu viel Zeit und hat eine Anlaufphase. Darüber hinaus müssen die Gebläse betrieben werden und der für den jeweiligen Temperaturtransfer erforderliche Druck ist begrenzt. Darüber hinaus müssen vergleichsweise große Düsen erstellt werden.

Ein weiterer Nachteil ergibt sich beim Vorschub einer Glasscheibe, die um eine in Transportrichtung verlaufende Biegelinie gebogen wird. Diese tendiert dazu, jeweils in dem Bereich, wo sie aus dem Ofen läuft, nach unten abzufalten.

Ein weiterer Nachteil der vorbekannten Vorrichtung ergibt sich durch die Verwendung von Biegewalzen. Für jede gewünschte Biegeform muss praktisch ein Walzensatz erstellt werden.

Ausgehend vom vorbeschriebenen Stand der Technik liegt der Erfindung die **Aufgabe** zugrunde, das vorbekannte Verfahren zu verbessern und die beschriebenen Nachteile auszuräumen. Insbesondere soll der Einsatz von Luftstörmung optimiert werden.

Zur technischen **Lösung** wird mit der Erfindung vorgeschlagen ein Verfahren mit den Merkmalen des Patentanspruches 1. Weitere Vorteile und Merkmale sind in den Unteransprüchen gekennzeichnet.

Vorrichtungsseitig ergibt sich die **Lösung** aus einer Vorrichtung mit den Merkmalen des Anspruches 9. Auch hier kennzeichnen die Unteransprüche weitere Vorteile und Merkmale.

Mit der Erfindung wird vorgeschlagen, dass verfahrensseitig sowohl Gebläseluft als auch Druckluft eingesetzt werden. Diese können in beliebiger Weise kombiniert werden. Der Einsatz von Druckluft in Form der vom Kompressor erzeugten Luft hat den Vorteil, dass diese gespeichert werden kann. Ein An- und Abschalten erfolgt durch Öffnen und Schließen eines Ventils, vorzugsweise im Bereich der jeweiligen Düsen, so dass keinerlei Zeitverzögerung entsteht und somit die Luft gesteuert und gezielt eingesetzt werden kann. Darüber hinaus kann ein entsprechend hoher Druck verwendet werden, so dass sich ein optimaler Temperaturtransfer ergibt. Schlussendlich können die für die Druckluft vorgesehenen Luftdüsen sehr viel kleiner gebaut werden.

Die Düsen sind hinsichtlich der Richtung steuerbar ebenso wie der Druck. Die Gebläseluft kann dauerhaft eingesetzt oder zugeschaltet werden und in optimaler Weise mit der Druckluft kombiniert sein.

Der Einsatz von Druckluft bei entsprechenden Glasverformungsvorrichtungen ist bisher nicht bekannt.

Gemäß einem weiteren vorteilhaften Vorschlag der Erfindung ist vorgesehen, dass eine Biegelinie der Glasscheibe zumindest zu Beginn der Verformung auf einer Höhe gehalten wird. Es hat sich herausgestellt, dass sich bei einer Verformung um eine virtuelle Achse, das heißt beim Rundbiegen einer Scheibe, dann im Bereich des erwärmten Zuführbereiches Deformationen ergeben können, wenn der erwärmte Bereich der Scheibe infolge Schwerkraft beispielsweise absacken kann. Aus diesem Grunde wird mit der Erfindung vorgeschlagen, eine Unterstützungslinie vorzusehen. Als Biegelinie wird in diesem Zusammenhang ein Bereich der Scheibe verstanden, der in Zuführrichtung verlaufend eine unterste Verformungslinie bildet, also eine unterste sich durch Verbiegen um eine parallel zur Zuführrichtung laufende Achse ergebende Materialebene.

Gemäß einem vorteilhaften Vorschlag kann zur Verformung ein Stangengestell eingesetzt werden.

Im Stand der Technik wird eine einzelne Bearbeitungs- oder Biegeebene durch ein formgebendes, also vorgebogenes Walzenelement gebildet. Die jeweilige Stelle der Glasscheibe, die über diese Walze läuft, wird in dieser Biegeebene entsprechend gebogen. Gemäß der vorliegenden Erfindung wird vorgeschlagen, die einzelne Biegeebene durch Stangen auszugestalten. So können zwei oder mehrere Stangen zusammen eine entsprechende Biegeebene definieren. In vorteilhafter Weise können die Stangen relativ zueinander verstellbar sein, um auf diese Weise flexibel an neue Formen angepasst zu werden. Auch dies ist ein Vorteil gegenüber bestehendem Stand der Technik, bei welchem für jede Biegeform neue Walzen eingerichtet werden mussten. Weiterhin wird vorgeschlagen, dass die Stangen einzelverstellbar sind. Auch können die Stangen als drehbare Walzen ausgebildet sein, die ihrerseits auch antreibbar ausgestaltet sein können. Auf diese Weise ist das Stangengestell insgesamt überaus flexibel an den jeweiligen Einsatzfall anpassbar.

Mit der Erfindung werden vorbekannte Verfahren mit einfachen Mitteln erheblich verbessert, ohne dass dabei die industrielle Fertigung entsprechend gebogener Scheiben benachteiligt oder beeinträchtigt wird.

Vorrichtungsseitig wird vorgeschlagen, dass die Luftdüsen mit Gebläseluft und/oder Kompressorluft, also Druckluft, einsetzbar sind. Erfindungsgemäß ist ein Druckluftspeicher vorgesehen. Die Druckluftdüsen können gemäß der Erfindung durch Ventile gesteuert sein. Die Düsen sind verstellbar. Darüber hinaus ist der Luftdruck einstellbar.

Durch eine Zentralsteuerung können auf diese Weise die Düsen und damit die Luft optimiert eingesetzt werden, und zwar sowohl örtlich als auch hinsichtlich der Richtung und des Druckes. Bei entsprechend hohem Druck bei Verwendung von Druckluft findet auch ein entsprechend guter Wärmetransfer statt.

In vorteilhafter Weise umfasst die Biegestation Unterstützungselemente zur Unterstützung einer Längsmittellinie der Glasscheibe. Die Längsmittellinie ist im Wesentlichen eine Biegelinie einer Glasscheibe unabhängig von ihrer geometrischen Gestaltung. In diesem Bereich sind Unterstützungselemente, beispielsweise Rollen, Walzen oder dergleichen angeordnet, um ein Falten beziehungsweise nach unten Knicken der zu verformenden Scheibe in dem entsprechenden Bereich zu verhindern und die Biegelinie entsprechend zu unterstützen.

In vorteilhafter Weise wird die Biegestation durch ein Stangengestell gebildet. Es müssen somit nicht mehr für jede Form Biegewalzen erstellt werden, sondern es kann die jeweilige Form durch die geschickte Einstellung der Stangen gebildet werden. In vorteilhafter Weise wird ein Biegebett durch im Wesentlichen horizontale Basisstangen und geneigte Seitenstangen gebildet. Alle Stangen sind verschwenkbar und verstellbar, so dass nahezu jede beliebige Form und über die Länge einer Biegestation auch jede beliebige Konturverlauf oder Biegeverlauf einstellbar ist.

Weitere Vorteile und Merkmale der Erfindung ergeben sich aus der folgenden Beschreibung anhand der Figuren. Dabei zeigen:
- Fig. 1: eine schematische Seitenansicht einer Glas-Verformungsvorrichtung;
- Fig. 2: eine schematische Ansicht von Biegewalzen nach dem Stand der Technik;
- Fig. 3: eine perspektivische teilgeschnittene Ansicht einer Biegestation gemäß der Erfindung;
- Fig. 4: eine Frontansicht der Vorrichtung gemäß Fig. 3;
- Fig. 5: eine Seitenansicht einer erfindungsgemäßen Glas-Verformungsvorrichtung und
- Fig. 6: eine Draufsicht auf eine Biegestation gemäß der Erfindung.

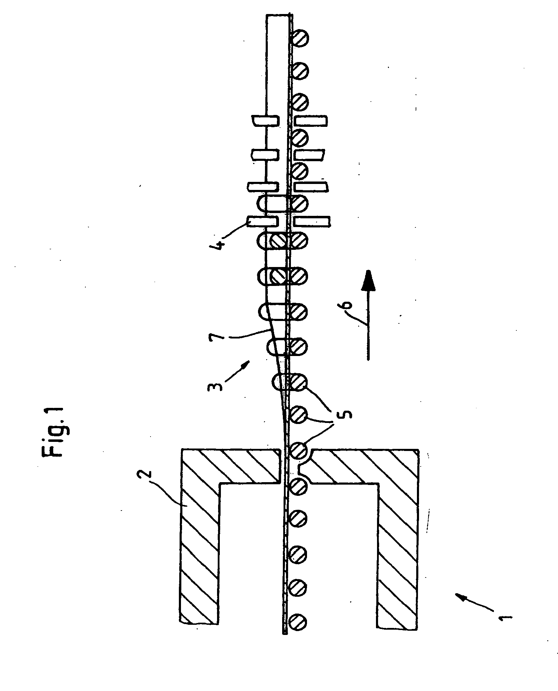

Fig. 1 zeigt schematisch in Seitenansicht eine erfindungsgemäße Verformungsvorrichtung 1, welche aus einem Ofen 2, einer Biegestation 3 und einer Kühlstation 4 besteht. In der gezeigten Ausführungsform wird eine zu verformende Platte 7 in der Transportrichtung 6 kontinuierlich vorgeschoben. Sie muss hierbei bis zum Ende der Erwärmung kontinuierlich in Bewegung sein. Die Platte 7 wird auf Rollen 5 horizontal aufgelegt und zunächst im Ofen 2 auf Erweichungstemperatur, beispielsweise im Bereich von 630°C, erwärmt. Dabei kann die ganze Platte 7 im Ofen 2 liegen oder nur mit dem jeweiligen Bearbeitungssegment. Nach Erreichen der Erweichungstemperatur der Platte oder des Segmentes wird die Platte kontinuierlich vorgefahren, wodurch das nächste Segment im Ofen erwärmt wird, während gleichzeitig das bereits erwärmte Segment in der Biegestation 3 verformt wird. Im gezeigten Ausführungsbeispiel umfasst die Biegestation 3 mehrere hintereinanderliegende Stufen, so dass die Segmente der vorgeschobenen Platte 7 in den endgültig gewünschten Radius gebogen werden, während dahinterliegende Segmente noch in den Ofen auf Erweichungstemperatur erwärmt werden. Nach dem Verlassen der letzten Verformungsstufe erreicht das endgültig verformte Plattensegment die Kühlstation 4, wo beispielsweise auf die Plattenoberflächen Kühlluft aufgeblasen wird. Es ist offensichtlich, dass mit der nach dem erfindungsgemäßen Verfahren arbeitenden erfindungsgemäßen Vorrichtung nahezu endlose verformte Platten herstellbar sind.

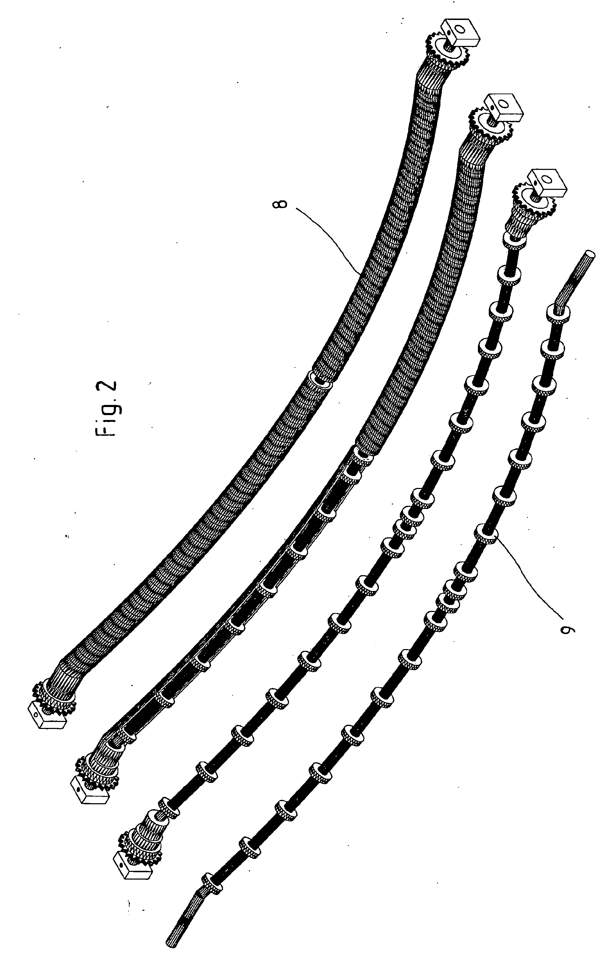

Fig. 2 zeigt schematisch Biegewalzen nach dem Stand der Technik. Es zeigt sich, dass diese, ob sie Voll- oder nur Kernwalzen mit Walzenringen sind, jeweils eine gewisse Vorformung aufweisen müssen. Insofern war es nach dem Stand der Technik erforderlich, jeweils die entsprechend geformten Walzen für den gewünschten Verformungsvorgang herzustellen beziehungsweise einzusetzen. Die Walzen können beispielsweise ummantelte Walzen 8 sein, Vollwalzen oder nur segmentierte Walzen mit Walzenringen 9. Jede einzelne Walze entspricht einer Biegeebene.

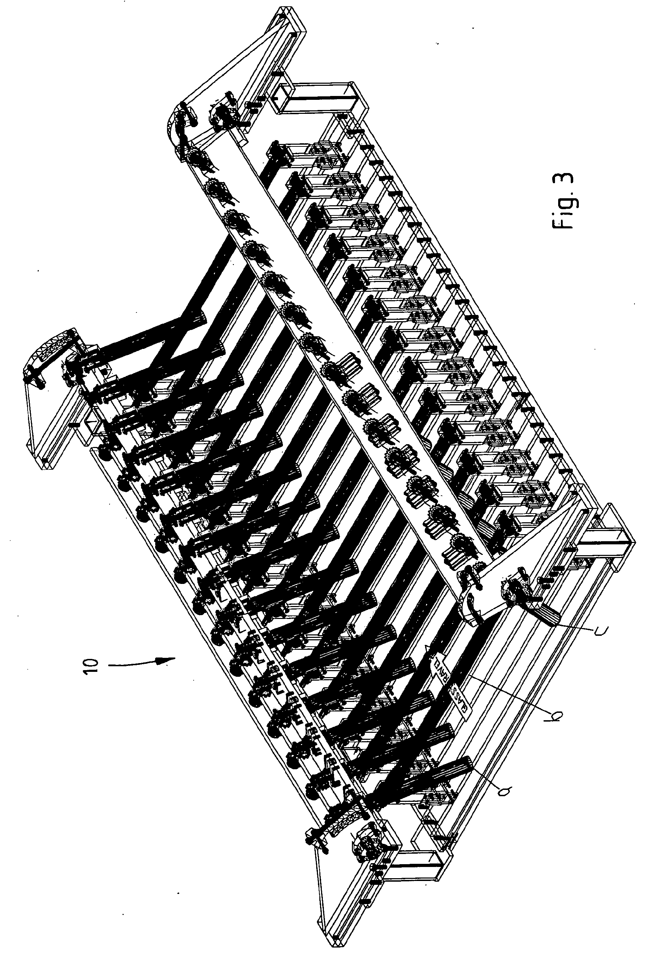

Gemäß Fig. 3 ist die erfindungsgemäße Ausgestaltung einer Biegestation 10 zu erkennen. Die einzelne Biegeebene wird im gezeigten Ausführungsbeispiel durch drei Walzensegmente, bezeichnet mit a, b und c, gebildet. Auch wenn im gezeigten Ausführungsbeispiel zu Zwecken der Darstellung die Walzensegmente als gerade Walzenstücke gezeigt sind, können diese auch entsprechende Biegungen oder Konturen haben. Die Seitenwalzen a und c lassen sich so verfahren, dass ihr Neigungswinkel sich verändert. Dabei verändert sich auch die frei Strecke der Horizontalwalze b, die ihrerseits höhenverfahrbar ist.

Die Walzen können einzeln angetrieben werden.

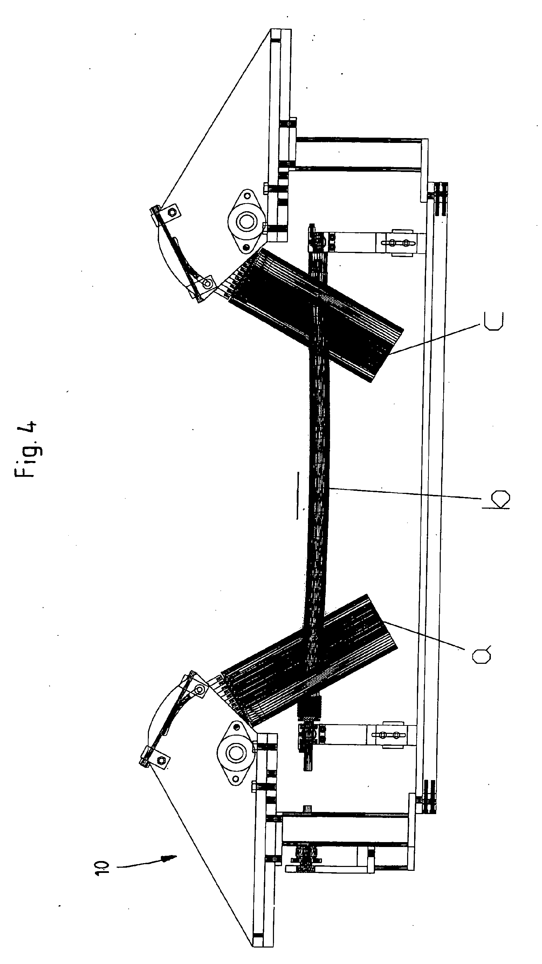

Die Frontalansicht gemäß Fig. 4 zeigt, wie über die Länge eines Walzenbettes eine entsprechende Biegekontur einstellbar ist. Die Walzen a und c können über die Länge hinsichtlich ihrer Neigung variiert werden, so dass eine vorgetriebene Glasscheibe vom Beginn der Biegestation bis zum Ende immer weiter aufgebogen wird.

Die Walzen können je nach Aufgabenstellung auch einzeln oder in Gruppen antreibbar sein. Mit der erfindungsgemäßen Ausgestaltung einer Biegestation können dreidimensional verformte Glasscheiben kontinuierlich hergestellt werden.

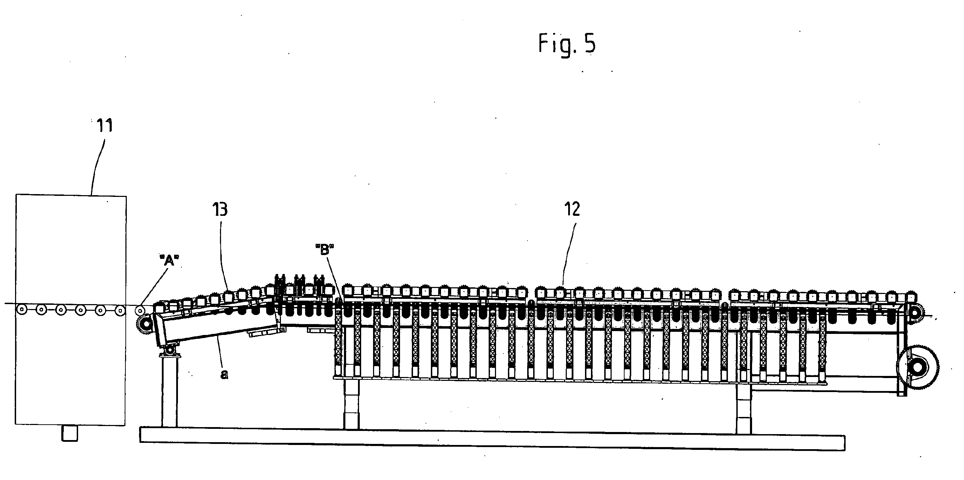

Fig. 5 zeigt eine Seitenansicht einer erfindungsgemäßen Vorrichtung. Aus dem Ofen 11 laufen Glasscheiben auf eine Rampe 13 auf und gelangen dann auf die Biegestation 12. Mit "A" und "B" ist eine Bearbeitungsebene bezeichnet, die die Ebene darstellt, auf der die Scheibe aus dem Ofen geführt wird. In der Verformungsstation wird die Scheibe dann entsprechend gebogen, wobei sich gezeigt hat, dass es wichtig ist, dass der auf der Ebene AB liegende zentrale Bereich der Glasscheibe immer auf der gleichen Ebene gehalten wird, wird durch die Rampe 13 der unterste Bereich der angebogenen Glasscheibe auf die Bearbeitungsebene AB angehoben und unterstützt. Auch über das weitere Biegebett sind entsprechende Unterstützungswalzen angeordnet, um sicherzustellen, dass im Centerbereich jeweils eine Unterstützung stattfindet.

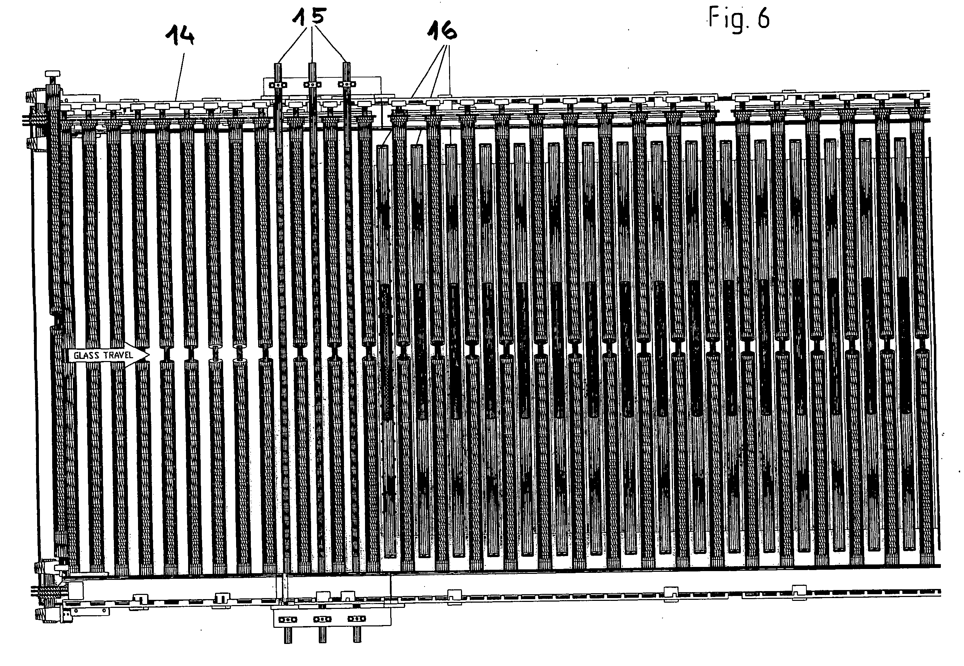

Gemäß Fig. 6 sind im Biegebereich 14 Luftleitungen 15 angeordnet, die Düsen aufweisen, durch die Druckluft ausgegeben werden kann. Mit 16 sind in Fig. 6 die Leitungen für durch Zentrifugalgebläse erzeugte Luft bezeichnet. Durch diese Anordnungen werden die Wärmetransferkoeffizienten sehr hoch, die Leitungen kleiner und es ist möglich, komprimierte Luft in Tanks vorzuhalten.

Die Verwendung von Druckluftleitungen 15 ist im Stand der Technik nicht bekannt. Wie die Fig. 6 zeigt, können die Druckluftleitungen 15 sehr viel kleiner gebaut werden als die Leitungen 16 für die Gebläseluft. Darüber hinaus können die Düsen einzeln oder in Gruppen oder Leitungsweise angesteuert werden, je nach Einsatzfall. Darüber hinaus können die Düsen gerichtet werden. Die Leitungen 15 sind mit einem nicht gezeigten Druckluftspeicher verbunden. Eine Steuerung steuert entsprechende Ventile an.

Die Anordnung der Gebläseluftdüsen 16 ermöglicht ebenfalls die Einstellung der Düsenrichtung. Es ist auch möglich, hier Düsenspalte vorzusehen. Die Gebläseluft lässt sich im Rahmen der Möglichkeiten ebenfalls hinsichtlich des Druckes einstellen, dient jedoch in erster Linie der an sich bekannten Vorspannung.

Durch die Verwendung der neuartigen Druckluftleitungen 15 lässt sich eine gezielte Bearbeitung der Glasscheiben in diesem Segment durchführen.

Die beschriebenen Ausführungsbeispiele dienen nur der Erläuterung und sind nicht beschreibend.

### Bezugszeichenliste

- 1: Verformungsvorrichtung
- 2: Ofen
- 3: Biegestation
- 4: Kühlstation
- 5: Rollen
- 6: Transportrichtung
- 7: Platte
- 8: Walzen
- 9: Walzenringe
- 10: Biegestation
- 11: Ofen
- 12: Biegestation
- 13: Rampe
- 14: Biegebereich
- 15: Druckluftleitungen
- 16: Gebläseluftleitungen
- a: Walze
- b: Walze
- c: Walze
- A - B: Bearbeitungsebene

## Patentansprüche

1. Verfahren zum dreidimensionalen Verformen von Glasscheiben, welche
a) im ersten Schritt auf die Erweichungstemperatur erwärmt,
b) im zweiten Schritt verformt, und
c) im dritten Schritt durch gezielte Kühlung vorgespannt werden,
wobei die Verfahrensschritte hintereinander auf einzelne aufeinanderfolgende Bearbeitungssegmente der zu verformenden Platte derart angewandt werden, dass unterschiedliche nachfolgende Bearbeitungssegmente der Platte zur gleichen Zeit in einem anderen Verfahrensschritt wirksam bearbeitet werden, wobei nachfolgende Bearbeitungssegmente beispielsweise noch auf Verarbeitungstemperatur erwärmt werden, während vorlaufende Bearbeitungssegmente beispielsweise schon verformt werden, wobei die Glasscheiben in wenigstens einem Verfahrensschritt mit Luftströmungen beaufschlagt werden,
**dadurch gekennzeichnet,**
**dass** die Luftströmungen gesteuert aus Gebläseluft und Kompressorluft kombiniert werden.

2. Verfahren nach Anspruch 1, **dadurch gekennzeichnet, dass** die Luft auf die Oberflächen der Glasscheibe aufgeblasen wird.

3. Verfahren nach einem der vorhergehenden Ansprüche, **dadurch gekennzeichnet, dass** die Luft hinsichtlich Temperatur, Druck und/oder Richtung steuerbar ist.

4. Verfahren nach einem der vorhergehenden Ansprüche, **dadurch gekennzeichnet, dass** die Glasscheibe im Bereich einer Biegelinie zu Beginn des Verformens entlang einer virtuellen Linie auf einer Höhe gehalten wird.

5. Verfahren nach einem der vorhergehenden Ansprüche, **dadurch gekennzeichnet, dass** die Glasscheibe zum Verformen über ein Stangengestell verfahren wird.

6. Verfahren nach Anspruch 5, **dadurch gekennzeichnet, dass** die Stangen des Gestells einzeln oder gruppiert ansteuerbar sind.

7. Verfahren nach Anspruch 6, **dadurch gekennzeichnet, dass** die Stangen verstellbar sind.

8. Verfahren nach einem der Ansprüche 6 oder 7, **dadurch gekennzeichnet, dass** die Stangen als drehbare Walzen ausgelegt sind.

9. Vorrichtung zum dreidimensionalen Verformen von Glasscheiben nach dem Verfahren nach wenigstens einem der Ansprüche 1 bis 8, mit einem Ofen, einer Biegestation, einer Kühlstation und einer Transportvorrichtung, wobei der Ofen, die Biegestation und die Kühlstation in dieser Reihenfolge aneinander anschließend direkt hintereinander angeordnet eine Transportbahn bilden, entlang derer die zu verformende Platte mit der Transportvorrichtung kontinuierlich vorgeschoben wird, wobei die Vorrichtung wenigstens eine Luftdüsen aufweisende Luftdüsenbaugruppe aufweist, die gesteuert zur Ausgabe von Gebläseluft und Kompressorluft beschaltbar ist.

10. Vorrichtung nach Anspruch 9, **dadurch gekennzeichnet, dass** die Luftdüsen wenigstens teilweise verstellbar sind.

11. Vorrichtung nach einem der Ansprüche 9 oder 10, **dadurch gekennzeichnet, dass** in der Biegestation Unterstützungselemente zur Unterstützung einer Längsmittellinie der Glasscheibe angeordnet sind.

12. Vorrichtung nach einem der Ansprüche 9 bis 11, **dadurch gekennzeichnet, dass** die Biegestation durch ein Stangengestell gebildet ist.

13. Vorrichtung nach einem der Ansprüche 9 bis 12, **dadurch gekennzeichnet, dass** die Unterstützungselemente durch im Stangengestell angeordnete Walzenelemente gebildet sind.

14. Vorrichtung nach einem der Ansprüche 9 bis 13, **dadurch gekennzeichnet, dass** die Stangen als drehbare Walzen ausgerichtet sind.

15. Vorrichtung nach einem der Ansprüche 9 bis 14, **dadurch gekennzeichnet, dass** einzelne Stangen verstellbar sind.

16. Vorrichtung nach Anspruch 15, **dadurch gekennzeichnet, dass** einzelne Walzen antreibbar sind.
